# EUROPEAN PATENT APPLICATION

(11) **EP 3 608 816 A1**
(43) Date of publication of application: **12.02.2020**
(21) Application number: 18187985.9
(22) Date of filing: 08.08.2018
(51) Int. Cl.: G06F 21/53, H04B 5/00, H04L 29/06, H04W 4/80, H04W 12/08

(54) **PROCESSING SYSTEM AND METHOD OF EXECUTING FUNCTIONS**

(71) Applicant: NXP B.V., 5656 AG Eindhoven (NL)
(72) Inventor: KULKARNI, Giten, 5656 AG Eindhoven (NL); PAUL, Christian, 5656 AG Eindhoven (NL); PUTHALAN, Shameer, 5656 AG Eindhoven (NL)
(74) Representative: Krott, Michel

(57) **Abstract**

In accordance with a first aspect of the present disclosure, a processing system is provided, comprising: a first processing unit configured to execute one or more first functions; a second processing unit configured to execute one or more second functions; an operating system configured to provide the first processing unit and the second processing unit with resources for executing the first functions and second functions; wherein a first subset of resources of the operating system is allocated to the first processing unit and a second subset of resources of the operating system is allocated to the second processing unit. In accordance with a second aspect of the present disclosure, a corresponding method of executing functions in a processing system is conceived. In accordance with a third aspect of the present disclosure, a corresponding computer program is provided.

## Description

### OVERVIEW

The present disclosure relates to a processing system, to a method of executing functions and to a corresponding computer program. Modern processing systems may contain multiple secure execution environments. For example, so-called NFC-SE combo integrated circuits (ICs) may contain a near field communication (unit) and multiple secure elements (SEs), such as an embedded secure element (eSE) and an embedded universal integrated circuit card (eUICC). An embedded secure element (eSE) is a tamper-resistant chip, which is typically available in different sizes and designs, and which can be embedded in any mobile device. An eSE is often configured to retain sensitive data in a secure manner and to release said data only to authorized users. An eSE is often configured to secure a wide range of applications, for example in the areas of payment, access control, public transportation, cloud computing and e-government. An embedded universal integrated circuit card (eUICC) - often referred to as embedded subscriber identity module (eSIM) as well - is a secure element, i.e. another tamper-resistant chip, which is designed to remotely manage multiple mobile network operator subscriptions. It may be challenging to separate the multiple secure execution environments in processing systems of the kind set forth.

### SUMMARY

In accordance with a first aspect of the present disclosure, a processing system is provided, comprising: a first processing unit configured to execute one or more first functions; a second processing unit configured to execute one or more second functions; an operating system configured to provide the first processing unit and the second processing unit with resources for executing the first functions and second functions; wherein a first subset of resources of the operating system is allocated to the first processing unit and a second subset of resources of the operating system is allocated to the second processing unit.

In an embodiment, the first subset of resources and the second subset of resources are disjoint subsets.

In an embodiment, the first subset of resources and the second subset of resources are separated from each other by a logical firewall.

In an embodiment, a third subset of resources of the operating system is allocated to both the first processing unit and the second processing unit.

In an embodiment, the first processing unit is an embedded Secure Element (eSE).

In an embodiment, the second processing unit is an embedded Subscriber Identity Module (eSIM) or an embedded Universal Integrated Circuit Card (eUICC).

In an embodiment, the resources include one or more instances of GlobalPlatform (GP) objects.

In an embodiment, each subset is associated with a subset identifier that uniquely identifies said subset.

In an embodiment, the operating system is configured to verify if input data received from the first processing unit or the second processing unit correspond the identifier of the subset allocated to said first processing unit or second processing unit, and to grant the first processing unit or the second processing unit access to the resources in the allocated subset if the input data correspond to said identifier.

In an embodiment, the first processing unit and the second processing unit are accessible through separate interfaces.

In an embodiment, said interfaces are physical interfaces and/or logical interfaces.

In accordance with a second aspect of the present disclosure, a method of executing functions in a processing system is conceived, the method comprising: a first processing unit of the processing system executes one or more first functions; a second processing unit of the processing system executes one or more second functions; an operating system provides the first processing unit and the second processing unit with resources for executing the first functions and second functions; wherein a first subset of resources of the operating system is allocated to the first processing unit and a second subset of resources of the operating system is allocated to the second processing unit.

In an embodiment, the first subset of resources and the second subset of resources are disjoint subsets.

In accordance with a third aspect of the present disclosure, a computer program is provided, the computer program comprising executable instructions that, when executed, carry out or control a method of the kind set forth.

In an embodiment, a non-transitory computer-readable medium comprises a computer program of the kind set forth.

### DESCRIPTION OF DRAWINGS

Embodiments will be described in more detail with reference to the appended drawings, in which:
Fig. 1 shows an illustrative embodiment of a processing system;
Fig. 2 shows an illustrative embodiment of a method of executing functions;
Fig. 3 shows another illustrative embodiment of a processing system;
Fig. 4 shows a further illustrative embodiment of a processing system;
Fig. 5 shows an illustrative embodiment of a portion of a processing system;
Fig. 6 shows an illustrative embodiment of a method of processing a command;
Fig. 7 shows another illustrative embodiment of a method of processing a command.

### DESCRIPTION OF EMBODIMENTS

Modern processing systems may contain multiple secure execution environments. For example, so-called NFC-SE combo chips may contain a near field communication (unit) and multiple secure elements (SEs), such as an embedded secure element (eSE) and an embedded universal integrated circuit card (eUICC). An embedded secure element (eSE) is a tamper-resistant chip, which is typically available in different sizes and designs, and which can be embedded in mobile devices, vehicles and internet-of-things (IoT) devices, for example. An eSE is often configured to retain sensitive data in a secure manner and to release said data only to authorized users. An eSE is often configured to secure a wide range of applications, for example in the areas of payment, access control, public transportation, cloud computing and e-government. An embedded universal integrated circuit card (eUICC) - often referred to as embedded subscriber identity module (eSIM) as well - is a secure element, i.e. another tamper-resistant chip, which is designed to remotely manage multiple mobile network operator subscriptions. It may be challenging to separate the multiple secure execution environments in processing systems of the kind set forth.

Therefore, in accordance with the present disclosure, a processing system is provided, comprising: a first processing unit configured to execute one or more first functions; a second processing unit configured to execute one or more second functions; an operating system configured to provide the first processing unit and the second processing unit with resources for executing the first functions and second functions; wherein a first subset of resources of the operating system is allocated to the first processing unit and a second subset of resources of the operating system is allocated to the second processing unit. By allocating particular subsets of operating system resources to the different processing units, the separation of the secure execution environments of the processing units is facilitated. Thus, the operating system is effectively shared between the processing units, but specific subsets of the operating system are allocated to the respective processing units. In contrast, in known systems, different secure elements typically have their own operating system: although multiple operating systems result in an adequate separation, it is less resource-efficient. In accordance with the present disclosure, the operating system can be shared, while still enabling a separation of the secure execution environments of the processing units. It is noted that the presently disclosed system can be extended with more processing units, i.e. a third, fourth, fifth etc. processing unit. In that case, the operating system is shared among a plurality of processing unit, and a specific subset of resources is allocated to each processing unit.

In an embodiment, the first subset of resources and the second subset of resources are disjoint subsets. In this way, since the use of disjoint subsets implies that no operating system resources can be shared, a stricter separation of the secure execution environments is facilitated. Furthermore, in this way, the different processing units can request resources which by system definition have a single unit of allocation. For instance, the GlobalPlatform (GP) architecture specifies that some of its defined objects are 'singletons', meaning that only one instance of such an object can exist within the system.

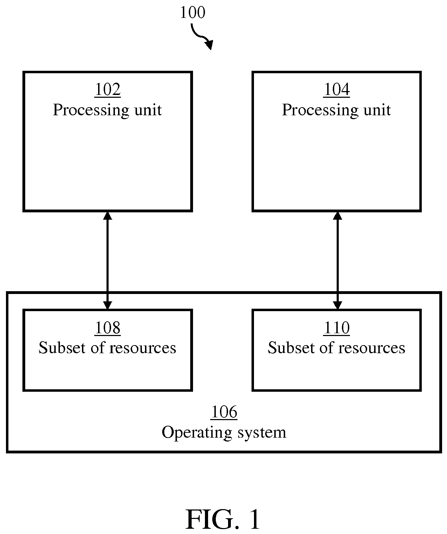

**Fig. 1** shows an illustrative embodiment of a processing system 100. The system 100 comprises a first processing unit 102, a second processing unit 104, and an operating system 106. An example of such an operating system is a GlobalPlatform-based operating system. More specifically, the operating system 106 may be a banking card operating system, a transit card operating system, an electronic identification document or card operating system, and/or a Java Card open platform (JCOP) operating system. The operating system 106 contains a first subset of resources 108 and a second subset of resources 110. Examples of such resources are GlobalPlatform (GP) objects, as defined in the *Card Specification*, version 2.2, published by the non-profit industry association GlobalPlatform. In accordance with the present disclosure, the first subset of resources 108 is allocated to the first processing unit 102, and the second subset of resources 110 is allocated to the second processing unit 104.

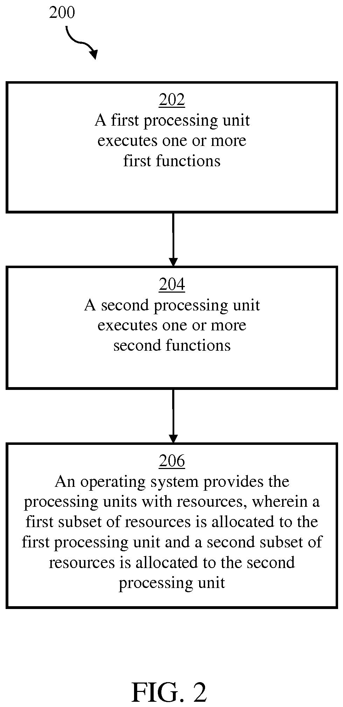

**Fig. 2** shows an illustrative embodiment of a method 200 of executing functions. The method 200 comprises, at 202, that a first processing unit executes one or more first functions, at 204, that a second processing unit executes one or more second functions, and at 206, that an operating system provides the processing units with resources, wherein a first subset of resources is allocated to the first processing unit and a second subset of resources is allocated to the second processing unit.

In an embodiment, the first subset of resources and the second subset of resources are separated from each other by a logical firewall. In this way, the separation of the secure execution environments is further facilitated. In particular, the logical firewall may be realized in the following alternative or complementary ways. First, each subset may be associated with a subset identifier that uniquely identifies said subset. In this way, access to the resources in the subsets may be regulated. For instance, in a practical and efficient implementation, the operating system may be configured to verify if input data received from the first processing unit or the second processing unit correspond to the identifier of the subset allocated to said first processing unit or second processing unit, and to grant the first processing unit or the second processing unit access to the resources in the allocated subset if the input data correspond to said identifier. More specifically, the operating system may be configured to verify if input data received from the first processing unit or the second processing unit match the identifier of the subset allocated to said first processing unit or second processing unit, and to grant the first processing unit or the second processing unit access to the resources in the allocated subset if the input data match said identifier. It is noted that the word "match" should be interpreted broadly, in the sense that it is not limited to an exact match (i.e. equality of the input data and the identifier of the subset). In other words, matching may imply that a certain error margin is taken into account, for example, or that an operation or transformation is applied on the input data - using the stored identifier - whose output may be indicative of a match.

Alternatively, or in addition, the first processing unit and the second processing unit may be accessible through separate interfaces. In this way, the secure execution environments formed by the respective processing units and their allocated resources are to a certain extent also physically separated. In other words, external components or devices can only access specific processing units and their allocated resources through the interfaces assigned to those specific processing units. This may be implemented as a hardcoded routing mechanism: in that case commands received through a specific interface will be routed, by a driver of the operating system, to a processing unit assigned to that interface. Thus, a physical firewall may effectively be implemented in this way. It is noted that a specific combination of a processing unit, one or more assigned interfaces and a subset of operating system resources exclusively allocated to said processing unit is referred to as a 'realm' herein. In practical and effective implementations, the interfaces are physical interfaces and/or logical interfaces. A logical interface may be implemented as a set of logical end points or ports supported on a specific physical interface. Different logical interfaces may thus be implemented as different sets of logical end points or ports supported on the same physical interface.

For instance, an NFC-SE combo IC may contain an eSE (first processing unit) and an eUICC (second processing unit). It is noted that the presently disclosed processing system and corresponding method of executing functions may be applied in any device in which two or more secure execution environments are present. The NFC-SE combo IC is merely an example of such a device. Both the eSE and eUICC may expect an independent ownership of the operating system and its resources. Since, generally speaking, technical specifications, such as GlobalPlatform specifications, GSMA specifications and ETSI specifications do not consider a combined system, running the eSE and the eUICC on a single operating system would imply that one of the two entities should exist under the ownership of the other. However, certain GlobalPlatform (GP) objects are expected to be singletons and any hierarchy would mean that one of the two has an overriding authority over the other. Therefore, in accordance with the present disclosure, multiple realms may be realized in the IC. More specifically, these realms may be separated from each other by a logical firewall, allowing multiple instances of the same GP objects to exists in their own realm and protecting against cross-realm access. Thus, in an embodiment, the resources include one or more instances of GP objects. It is noted that GP objects may be one of the following objects: an Issuer Security Domain (ISD), a Controlling Authority Security Domain (CASD), a Supplementary Security Domain (SSD), a Cipher, a Signature. Other operating system resources may include, for example, GSMA adaptation resources, such as an Issuer Security Domain-Root (ISD-R), an Issuer Security Domain-Profile (ISD-P), an Embedded UICC Controlling Authority Security Domain (ECASD), a Supplementary Security Domain (MNO-SD, SSDs within Profile), a Cipher, a Signature. It is noted that these are merely examples of GP objects; the resources may also include instances of other types of GP objects.

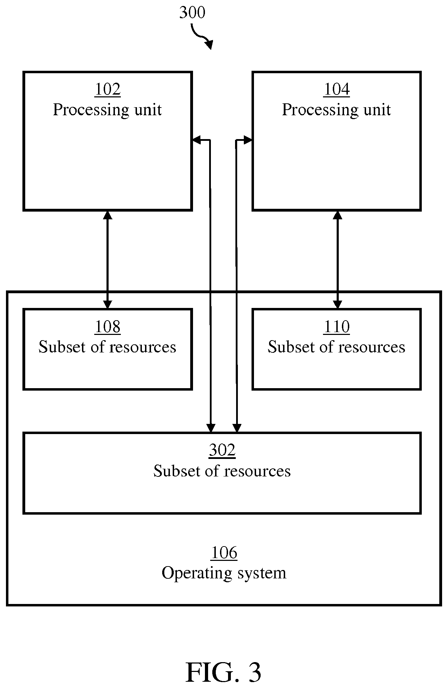

**Fig. 3** shows another illustrative embodiment of a processing system 300. In addition to the elements shown in Fig. 1, the system 300 comprises an additional subset of resources 302, which is comprised in the operating system 106. The additional subset of resources 302 is allocated to both the first processing unit 102 and to the second processing unit 104. Thus, in an embodiment, a third subset of resources of the operating system is allocated to both the first processing unit and the second processing unit. In this way, some resources of the operating system may easily be shared between the different processing units.

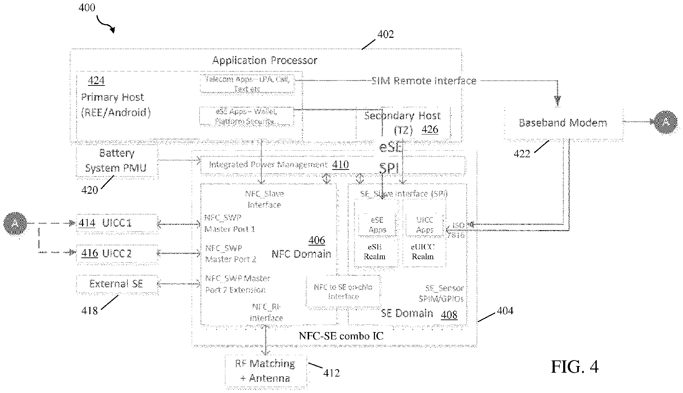

**Fig. 4** shows a further illustrative embodiment of a processing system 400. In particular, an example is shown of a system 400 that may contain a first processing unit (eSE) and a second processing unit (eUICC) of the kind set forth above. The system 400 may be included in a mobile device, such as a smart phone. The first processing unit (eSE) and the second processing unit (eUICC) form part of a secure element (SE) domain 408, which in turn forms part of an NFC-SE combo IC 404. The SE domain also comprises an operating system (not shown) of the kind set forth above. In accordance with the present disclosure, specific subsets of operating resources are allocated to the different processing units (eSE and eUICC). In addition to the SE domain 408, the NFC-SE combo IC 404 comprises an NFC domain 406 and an integrated power management unit 410. Furthermore, as shown in Fig. 4, the processing system 400 comprises an application processor 402, a battery and a system power management unit 420, a baseband modem 422, a radio frequency (RF) matching circuit and antenna 412, an external secure element 418, and two external universal integrated circuit cards (UICCs) 414, 416. Note that these external UICCs should not be confused with the embedded UICC (i.e., the second processing unit). The application processor 402 comprises a primary host 424 having installed a rich execution environment (REE), Android or any mobile platform operating system, and a secondary host 426 having, for example, TrustZone (TZ). The first processing unit (eSE) and the second processing unit (eUICC) in the SE domain 408 are accessible through separate physical and/or logical interfaces. In particular, the first processing unit (eSE) is accessible through a serial peripheral interface (eSE SPI) with the primary host 424, and the second processing unit (eUICC) is accessible through an interface that includes a ISO 7816 interface with the baseband modem 422 and a SIM remote interface between the baseband modem 422 and the primary host 424.

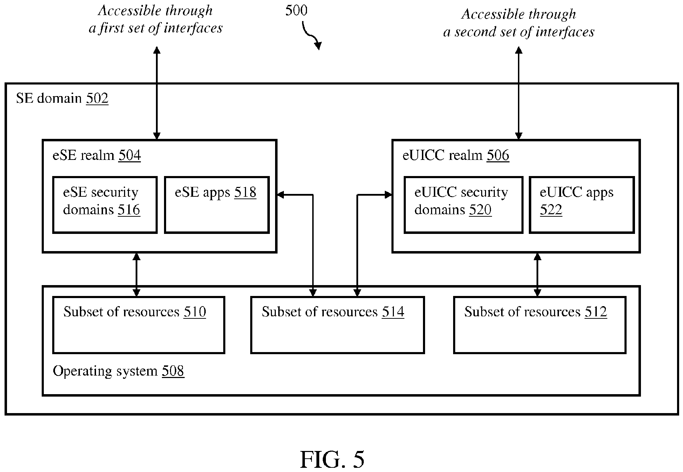

**Fig. 5** shows an illustrative embodiment of a portion of a processing system 500. In particular, Fig. 5 shows an embodiment of the SE domain which is shown as element 408 in Fig. 4. The SE domain 502 comprises eSE realm 504 that corresponds to the first processing unit and an eUICC realm 506 that corresponds to the second processing unit. The eSE realm 504 and the eUICC realm 506 may be implemented as tamper-resistant microprocessors. The eSE realm 504 and the eUICC realm 506 both contain dedicated security domains 516, 520 and dedicated applications 518, 522. In accordance with the present disclosure, different subsets 510, 512 of resources of the operating system 508 are allocated to the eSE realm 504 and the eUICC realm 506, respectively. Furthermore, an additional subset 514 of resources of the operating system is allocated to both the eSE realm 504 and the eUICC realm 506. Furthermore, as explained above by means of an example with reference to Fig. 4, the eSE realm 504 and the eUICC realm 506 are accessible through separate interfaces. Thus, the eSE realm 504 is accessible through a first set of interfaces, and the eUICC realm 506 may be accessible through a second set of interfaces, wherein the first set of interfaces and the second set of interfaces may be disjoint sets.

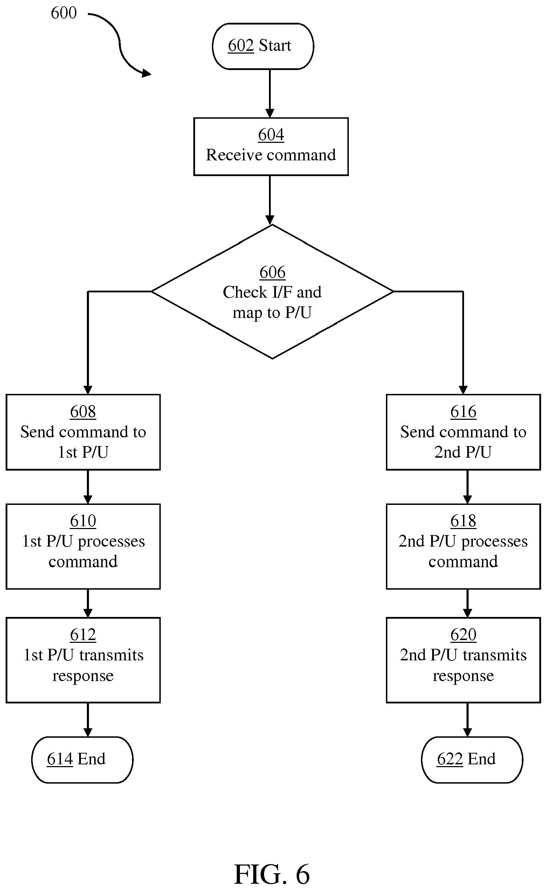

**Fig. 6** shows an illustrative embodiment of a method 600 of processing a command. At 602, the method 600 starts. At 604, a command is received. The command may be a GP command to access secure functions in the SE, such as a Card Content Management, Secure Storage, Install and Manage (Activate/Deactivate), Update, Delete Applets, Manage Secure Credentials and Certificates, Telecom Operation e.g. Network Authentication, Mobile network Operator Profile Management (Install, Activate, Deactivate, Delete), eUICC Credentials Management command. In practice, the communication layer of the Operating System receives the commands and maps it to the required processing unit. More specifically, at 606, it is checked through which physical and/or logical interface the command is received, and the command is mapped to the corresponding processing unit. As mentioned above, this may be implemented as a hardcoded routing mechanism. Depending on the outcome, either the first processing unit or the second processing unit processes the command. If the first processing unit processes the command, the following steps are performed: at 608, the command is sent to the first processing unit, at 610, the first processing unit processes the command, at 612, the first processing unit transmits the response, and at 614, the method ends. More specifically, at 612, the first processing unit prepares and hands over the response to the communication layer of the operating system, and the operating system transmits the response on the interface through which the command was received. Similarly, if the second processing unit processes the command, the following steps are performed: at 616, the command is sent to the second processing unit, at 618, the second processing unit processes the command, at 620, the second processing unit transmits the response, and at 622, the method ends.

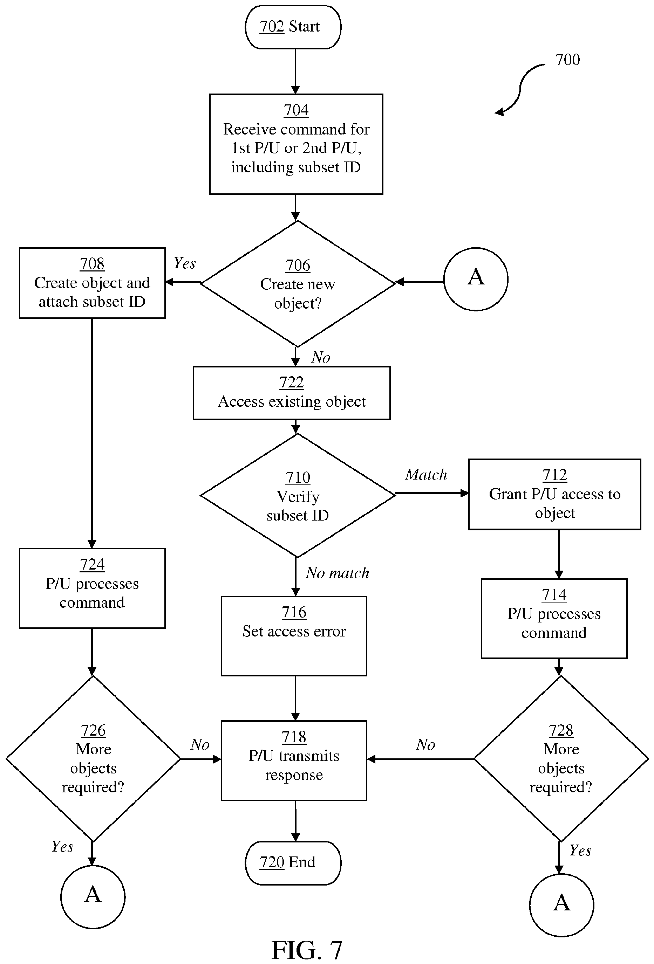

**Fig. 7** shows another illustrative embodiment of a method 700 of processing a command. At 700, the method 700 starts. At 704, a command is received for the first processing unit or the second processing unit, for example through one of the above-mentioned interfaces. The command includes a subset identifier that uniquely identifies a subset of operating system resources. At 704, the operating system checks whether a new object should be created. If yes, then the operating system creates the object and attaches a subset identifier to the object at 708. In this way, the object is henceforth allocated to the processing unit for which the command was received. If not, then an existing object is accessed at 722, and the subset identifier is verified at 710. More specifically, the operating system verifies whether the input data (subset identifier) included in the command matches the subset identifier that was attached to the object at the time it was created. If there is a match, the operating system grants the respective processing unit access to the object at 712. Subsequently, said processing unit processes the command at 714 and checks at 728 if more objects are required for processing the command. If yes, then the method 700 returns to step 706. If not, the processing unit transmits a response at 718. If there is no match, an access error is set at 716 - i.e. no access is granted to the object - and the processing unit transmits a response indicating the same, at 718. If a new object was created at 708, the processing unit processes the command at 724 and checks at 726 if more objects are required for processing the command. If yes, then the method 700 returns to step 706. If not, the processing unit transmits a response at 718. The method ends at 720.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: processing system
- 102: processing unit
- 104: processing unit
- 106: operating system
- 108: subset of resources
- 110: subset of resources
- 200: method of executing functions
- 202: a first processing unit executes one or more first functions
- 204: a second processing unit executes one or more second functions
- 206: an operating system provides the processing units with resources, wherein a first subset of resources is allocated to the first processing unit and a second subset of resources is allocated to the second processing unit
- 300: processing system
- 302: subset of resources
- 400: processing system
- 402: application processor
- 404: NFC-SE combo IC
- 406: NFC domain
- 408: SE domain
- 410: integrated power management unit
- 412: RF matching circuit and antenna
- 414: first universal integrated circuit card (UICC 1)
- 416: second universal integrated circuit card (UICC 2)
- 418: external secure element (SE)
- 420: battery and system power management unit (PMU)
- 422: baseband modem
- 424: primary host having rich execution environment (REE) or Android
- 426: secondary host having TrustZone (TZ)
- 500: portion of processing system
- 502: secure element (SE) domain
- 504: embedded secure element (eSE) realm
- 506: embedded universal integrated circuit card (eUICC) realm
- 508: operating system
- 510: subset of resources
- 512: subset of resources
- 514: subset of resources
- 516: eSE security domains
- 518: eSE applications
- 520: eUICC security domains
- 522: eUICC applications
- 600: method of processing a command
- 602: start
- 604: receive command
- 606: check interface and map to processing unit
- 608: send command to first processing unit
- 610: first processing unit processes command
- 612: first processing unit transmits response
- 614: end
- 616: send command to second processing unit
- 618: second processing unit processes command
- 620: second processing unit transmits response
- 622: end
- 700: method of processing a command
- 702: start
- 704: receive command for first processing unit or second processing unit, including subset identifier
- 706: create new object?
- 708: create object and attach subset identifier
- 710: verify subset identifier
- 712: grant processing unit access to object
- 714: processing unit processes command
- 716: set access error
- 718: processing unit transmits response
- 720: end
- 722: access existing object
- 724: processing unit processes command
- 726: more objects required?
- 728: more objects required?

## Claims

1. A processing system comprising:
a first processing unit configured to execute one or more first functions;
a second processing unit configured to execute one or more second functions;
an operating system configured to provide the first processing unit and the second processing unit with resources for executing the first functions and second functions;
wherein a first subset of resources of the operating system is allocated to the first processing unit and a second subset of resources of the operating system is allocated to the second processing unit.

2. The system of claim 1, wherein the first subset of resources and the second subset of resources are disjoint subsets.

3. The system of claim 1 or 2, wherein the first subset of resources and the second subset of resources are separated from each other by a logical firewall.

4. The system of any preceding claim, wherein a third subset of resources of the operating system is allocated to both the first processing unit and the second processing unit.

5. The system of any preceding claim, wherein the first processing unit is an embedded Secure Element, eSE.

6. The system of any preceding claim, wherein the second processing unit is an embedded Subscriber Identity Module, eSIM, or an embedded Universal Integrated Circuit Card, eUICC.

7. The system of any preceding claim, wherein the resources include one or more instances of GlobalPlatform, GP, objects.

8. The system of any preceding claim, wherein each subset is associated with a subset identifier that uniquely identifies said subset.

9. The system of claim 8, wherein the operating system is configured to verify if input data received from the first processing unit or the second processing unit correspond to the identifier of the subset allocated to said first processing unit or second processing unit, and to grant the first processing unit or the second processing unit access to the resources in the allocated subset if the input data correspond to said identifier.

10. The system of any preceding claim, wherein the first processing unit and the second processing unit are accessible through separate interfaces.

11. The system of claim 10, wherein said interfaces are physical interfaces and/or logical interfaces.

12. A method of executing functions in a processing system, the method comprising:
a first processing unit of the processing system executes one or more first functions;
a second processing unit of the processing system executes one or more second functions;
an operating system provides the first processing unit and the second processing unit with resources for executing the first functions and second functions;
wherein a first subset of resources of the operating system is allocated to the first processing unit and a second subset of resources of the operating system is allocated to the second processing unit.

13. The method of claim 12, wherein the first subset of resources and the second subset of resources are disjoint subsets.

14. A computer program comprising executable instructions that, when executed, carry out or control the method of claim 12 or 13.

15. A non-transitory computer-readable medium comprising the computer program of claim 14.

## Amended claims

### Amended claims in accordance with Rule 137(2) EPC.

1. A processing system comprising:
a first processing unit configured to execute one or more first functions;
a second processing unit configured to execute one or more second functions;
an operating system configured to provide the first processing unit and the second processing unit with resources for executing the first functions and second functions;
**characterized in that** the resources include one or more instances of GlobalPlatform, GP, objects, and **in that** a first subset of resources of the operating system is allocated to the first processing unit and a second subset of resources of the operating system is allocated to the second processing unit, wherein the first subset of resources and the second subset of resources are disjoint subsets.

2. The system of claim 1, wherein the first subset of resources and the second subset of resources are separated from each other by a logical firewall, in that each subset is associated with a subset identifier that uniquely identifies said subset, and in that the operating system is configured to verify if input data received from the first processing unit or the second processing unit correspond to the identifier of the subset allocated to said first processing unit or second processing unit, and to grant the first processing unit or the second processing unit access to the resources in the allocated subset if the input data correspond to said identifier.

3. The system of any preceding claim, wherein a third subset of resources of the operating system is allocated to both the first processing unit and the second processing unit.

4. The system of any preceding claim, wherein the first processing unit is an embedded Secure Element, eSE.

5. The system of any preceding claim, wherein the second processing unit is an embedded Subscriber Identity Module, eSIM, or an embedded Universal Integrated Circuit Card, eUICC.

6. The system of any preceding claim, wherein the first processing unit and the second processing unit are accessible through separate interfaces.

7. The system of claim 6, wherein said interfaces are physical interfaces and/or logical interfaces.

8. A method of executing functions in a processing system, the method comprising:
a first processing unit of the processing system executes one or more first functions;
a second processing unit of the processing system executes one or more second functions;
an operating system provides the first processing unit and the second processing unit with resources for executing the first functions and second functions;
**characterized in that** the resources include one or more instances of GlobalPlatform, GP, objects, and **in that** a first subset of resources of the operating system is allocated to the first processing unit and a second subset of resources of the operating system is allocated to the second processing unit, wherein the first subset of resources and the second subset of resources are disjoint subsets.

9. A computer program comprising executable instructions that, when executed by a computer, cause the computer to perform each of the steps of the method of claim 8.

10. A non-transitory computer-readable medium comprising the computer program of claim 9.
